# EUROPÄISCHE PATENTSCHRIFT

(11) **EP 1 193 149 B1**
(45) Veröffentlichungstag und Bekanntmachung des Hinweises auf die Patenterteilung: **10.10.2007**
(21) Anmeldenummer: 01120219.9
(22) Anmeldetag: 23.08.2001
(51) Int. Cl.: B60T 8/00

(54) **Steuersystem mit einem elektronischen Steuergerät zur radselektiven Bremsmomentregelung**
Vehicle control system with electronic control unit for individual wheel braking torque control
Système de contrôle pour véhicule automobile pour la régulation du couple de freinage pour chaque roue indépendamment

(30) Priorität: 29.09.2000 DE 10048251
(43) Veröffentlichungstag der Anmeldung: 03.04.2002
(73) Patentinhaber: Bayerische Motoren Werke Aktiengesellschaft, 80809 München (DE)
(72) Erfinder: Billig, Christian, 80939 München (DE); Fischer, Gerhard, 80992 München (DE)

(56) Entgegenhaltungen:
- EP-A- 0 180 033
- WO-A-00/53473
- US-A- 6 015 020
- US-A- 6 077 190
- PATENT ABSTRACTS OF JAPAN vol. 014, no. 276 (M-0984), 14. Juni 1990 (1990-06-14) & JP 02 080858 A (NISSAN MOTOR CO LTD), 20. März 1990 (1990-03-20)

## Beschreibung

Die Erfindung bezieht sich auf ein Steuersystem mit einem elektronischen Steuergerät zur radselektiven Bremsmomentregelung nach dem Oberbegriff des Patentanspruchs 1.

Ein derartiges Steuersystem ist beispielsweise unter dem Begriff DSC bei BMW Fahrzeugen in Serie (vgl. ATZ Artikel "Dynamische Stabilitäts Control DSC der Baureihe 7 von BMVV" 3/1999, S 134 ff.). Bekannt ist demnach eine Fahrdynamikregelung, die bei Auftreten instabiler Fahrzustände, wie insbesondere ein Gierverhalten bei einem Übersteuern des Fahrzeuges, radselektive Bremseingriffe durchführt.

Auch allradgetriebene Fahrzeuge mit derartigen Fahrdynamikregelsystemen in Form von Antriebsmomentregelungssystemen und/oder Bremsmomentregelungssystemen sind bekannt.

Aus dem Dokument US 6 077 190 ist ein weiteres Steuersystem gemäß dem Oberbegriff des Anspruchs 1 bekannt, das eine Interferenz zwischen dem Betrieb eines Fahrdynamikreglers und dem Betrieb eines Automatikgetriebe verhindert.

Es ist Aufgabe der Erfindung, ein Steuersystem eingangs genannter Art im Hinblick auf die Sicherheit, insbesondere bei steiler Bergabfahrt mit niedrigen Reibwertverhältnissen, zu verbessern.

Diese Aufgabe wird durch die Merkmale des Patentanspruchs 1 gelöst. Vorteilhafte Weiterbildung der Erfindung sind die Gegenstände der abhängigen Ansprüche.

Erfindungsgemäß erfasst bei einem Steuersystem mit einem elektronischen Steuergerät zur radselektiven Bremsmomentregelung in einem Fahrzeug mit einem elektronisch steuerbaren Getriebe das Steuergerät zur Erkennung von Radschlupf die Drehzahlen aller Räder des Fahrzeuges. Weiterhin erfasst das Steuergerät mindestens eine fahrdynamische Betriebsgröße des Fahrzeuges als Eingangssignal, durch die auch ein Gieren des Fahrzeuges erkennbar ist. Das Steuergerät veranlasst bei Vorliegen eines Schlupfes an mindestens einem Rad einer Achse und bei Vorliegen eines Gierens des Fahrzeuges einen Hochschaltvorgang im Getriebe zur Reduzierung des Motormoments um einen bestimmten Momentenbetrag. Gleichzeitig veranlasst das Steuergerät an beiden Rädern der anderen Achse, also der Achse, an der kein Radschlupf vorliegt, einen Bremseingriff zur Erhöhung des Bremsmoments um denselben Momentenbetrag.

Das Steuergerät veranlasst den Hochschaltvorgang und den Bremseingriff vorzugsweise nur dann, wenn ein Geschwindigkeitsregelsystem eingeschaltet ist.

Die Erfindung ist besonders vorteilhaft bei einer Anwendung in allradgetriebenen Geländefahrzeugen im Falle einer Bergabfahrt bei niedrigen Reibwertverhältnissen (z. B. auch Schotter) mit niedrigem Gang (z. B. bei eingeschaltetem Untersetzungsgetriebe, wenn vorhanden). Das Geschwindigkeitsregelsystem kann dabei eine sog. Bergabfahrtregelung sein, die vom Fahrer manuell vorausgewählt werden kann und die bei steiler Bergabfahrt zum Konstanthalten einer vorgegebenen niedrigen Geschwindigkeit (z. B. 8 km/h) Bremseingriffe durchführt. Eine derartige Bergabfahrtregelung ist unter dem Begriff "HDC" beispielsweise aus der EP 0 784 551 A1 bekannt. Mit Geländefahrzeugen werden Bergabfahrten im schwierigen Gelände in der Regel mit dem kleinstmöglichen Gang unter Ausnutzung des Motorbremsmoments bzw. Motorschleppmoments und/oder mit eingeschaltetem Geschwindigkeitsregelsystem (z. B. "HDC") gefahren. Bei steiler Bergabfahrt auf losem Untergrund bzw. bei niedrigen Reibwertverhältnissen kann das Motorschleppmoment infolge der hohen Übersetzung im kleinstmöglichen Gang (ggf. auch mit Untersetzungsgetriebe) dazu führen, dass Radschlupf an den Rädern der Hinterachse auftritt. Danach kann das gesamte Fahrzeug instabil werden und um die Hochachse gieren.

Über die ohnehin vorhandenen Zusatzsensoren bei Fahrdynamikregelsystemen im Fahrzeug, insbesondere mit Bremsmomentregelung und/oder mit Antriebsmomentregelung, lassen sich instabile Fahrzustände, insbesondere ein Gieren (Drehen um die Hochachse), erkennen. Derartige Zusatzsensoren erfassen beispielsweise den Lenkwinkel, die Querbeschleunigung und/oder die Gierrate als fahrdynamische Betriebsgrößen. Ergänzend wird darauf hingewiesen, dass die Erfindung vorzugsweise in das Steuergerät der ohnehin vorhandenen Fahrdynamikregelsysteme integriert wird.

Wenn das Steuergerät Schlupf, beim genannten Beispiel an mindestens einem Rad der Hinterachse, und eine Instabilität, insbesondere ein Gieren um die Hochachse, erkennt, sendet es einen Hochschaltbefehl an das Getriebesteuergerät des elektronisch steuerbaren Getriebes, damit das Motormoment bzw. beim vorliegenden Beispiel das Motorschleppmoment reduziert wird. Gleichzeitig wird der Momentenbetrag, um den das Motorschleppmoment durch den höheren Gang reduziert wird, als Bremsmomenterhöhung durch einen Bremseingriff an den Rädern der Achse vorgenommen, an der kein Radschlupf aufgetreten ist, also hier an den Rädern der Vorderachse. Diese Bremsmomentkompensation wird vorgenommen, damit die Fahrzeuggeschwindigkeit auf dem vor dem Zeitpunkt des Hochschaltens vorliegenden Wert gehalten werden kann. Wenn das Geschwindigkeitsregelsystem (hier "HDC") nicht bereits zuvor eingeschaltet war, kann es nach dem Hochschaltbefehl automatisch eingeschaltet werden. Der erfindungsgemäße Hochschaltbefehl mit gleichzeitiger Bremskompensation kann aber auch nur dann vorgenommen werden, wenn das Geschwindigkeitsregelsystem bereits eingeschaltet ist.

Das genannte Beispiel ist von einer Bergabfahrt vorwärts ausgegangen. Die Erfindung ist jedoch beispielsweise auch bei Bergabfahrt rückwärts anwendbar. In diesem Fall wird die Instabilität an der Vorderachse auftreten und der Bremseingriff nach dem Hochschaltbefehl wird an den Rädern der Hinterachse veranlasst.

Die Erfindung ist weder auf Fahrzeuge mit Geschwindigkeitsregelsystemen noch auf allradgetriebene Fahrzeuge beschränkt.

Durch die Erfindung wird ein Beitrag zur aktiven Fahrsicherheit geleistet, da sie die Beherrschbarkeit von Fahrzeugen bei schwierigem Gelände allgemein und bei Bergabfahrten mit allradgetriebenen Geländefahrzeugen bei niedrigem Gang im Speziellen erhöht.

## Patentansprüche

1. Steuersystem mit einem elektronischen Steuergerät zur radselektiven Bremsmomentregelung bei einem Fahrzeug mit einem elektronisch steuerbaren Getriebe, wobei das Steuergerät zur Erkennung von Radschlupf die Drehzahlen aller Räder des Fahrzeuges überwacht und mindestens eine fahrdynamische Betriebsgröße des Fahrzeuges als Eingangssignal erfasst, durch die ein Gieren des Fahrzeuges erkennbar ist, **dadurch gekennzeichnet, dass** das Steuergerät bei Vorliegen eines Schlupfes an mindestens einem Rad einer Achse und bei Vorliegen eines Gierens des Fahrzeuges einen Hochschaltvorgang im Getriebe zur Reduzierung des Motormoments um einen bestimmten Momentenbetrag veranlasst und dass das Steuergerät gleichzeitig an beiden Rädern der anderen Achse einen Bremseingriff zur Erhöhung des Bremsmoments um denselben Momentenbetrag veranlasst.

2. Steuersystem nach Patentanspruch 1, **dadurch gekennzeichnet, daß** das Steuergerät den Hochschaltvorgang und den Bremseingriff nur dann veranlasst, wenn ein Geschwindigkeitsregelsystem eingeschaltet ist.

## Claims

1. A control system with an electronic control apparatus for wheel-selective braking torque control in a vehicle with an electronically controllable transmission, wherein, to recognise wheel slippage, the control apparatus monitors the rotational speeds of all the wheels of the vehicle and detects at least one driving dynamic operating variable of the vehicle as an input signal, by means of which a yawing of the vehicle can be recognised, **characterised in that** when slippage is present at at least one wheel of an axle and when yawing of the vehicle is present, the control apparatus initiates a changing-up process in the transmission to reduce the engine torque by a specific torque amount and **in that**, at the same time, the control apparatus initiates a braking intervention to increase the braking torque by the same torque amount at the two wheels of the other axle.

2. A control system according to claim 1, **characterised in that** the control apparatus initiates the changing-up process and the braking intervention only when a speed control system is switched on.

## Revendications

1. Système de commande avec un appareil de commande électronique pour la régulation sélective par roue du couple de freinage d'un véhicule équipé d'une transmission à commande électronique,
l'appareil de commande surveillant la vitesse de rotation de toutes les roues du véhicule pour détecter le patinage de roue, et saisissant au moins un paramètre de fonctionnement de la dynamique de roulage du véhicule comme signal d'entrée pour détecter un mouvement de lacet du véhicule,
**caractérisé en ce qu'**
en cas de patinage sur au moins une roue d'un essieu et en cas de mouvement de lacet du véhicule, l'appareil de commande assure une montée en vitesse dans la transmission pour réduire le couple moteur d'une valeur déterminée, et
en même temps l'appareil de commande assure une action de freinage sur les deux roues de l'autre essieu pour augmenter le couple de freinage de la même valeur de couple.

2. Système de commande selon la revendication 1,
**caractérisé en ce que**
l'appareil de commande ne produit la montée en vitesse et l'action sur les freins que si le système de régulation de vitesse est mis en oeuvre.
